# EUROPEAN PATENT SPECIFICATION

(11) **EP 3 555 467 B1**
(45) Date of publication and mention of the grant of the patent: **01.01.2025**
(21) Application number: 17804058.0
(22) Date of filing: 17.11.2017
(51) Int. Cl.: F03D 80/70

(54) **LUBRICATION SYSTEM AND FILTER PLACEMENT**
SCHMIERSYSTEM UND FILTERPOSITIONIERUNG
SYSTÈME DE LUBRIFICATION ET PLACEMENT DE FILTRE

(30) Priority: 13.12.2016 DK PA201670988
(43) Date of publication of application: 23.10.2019
(73) Proprietor: Vestas Wind Systems A/S, 8200 Aarhus N (DK)
(72) Inventor: NIELSEN, Thomas Korsgaard, 7100 Vejle (DK)
(74) Representative: Vestas Patents Department
(86) International application number: PCT/DK2017/050383
(87) International publication number: WO 2018/108218

(56) References cited:
- EP-A1- 2 503 148
- EP-A2- 2 184 486
- EP-A2- 2 246 562
- EP-A2- 2 336 505
- WO-A1-98/13644
- CN-U- 201 568 226

## Description

### FIELD OF THE INVENTION

The present invention relates to a lubrication system for a wind turbine comprising a filtering system with at least one cylindrical filter container oriented in a direction forming an angle of at least 10° with respect to a vertical direction.

### BACKGROUND OF THE INVENTION

Wind turbines are currently receiving huge attention as they are considered as an environment friendly and clean alternative energy source. Considerable efforts are made every day to improve wind turbines making them more and more reliable and efficient.

Like any mechanical system, a wind turbine needs proper lubrication to function optimally. Furthermore, a fluid used for lubrication needs to be free of any contaminants as these can destroy components that are to be lubricated. Therefore, a good filtering system within a lubrication system is needed. Normally, filtering systems or filter cartridges are placed in upright positions within ±10° from a vertical direction. However, future designs can be made more compact and cheaper if more filter elements are stacked together, making filter cartridges longer than they are now. This cannot be done sufficiently when the filter cartridges arranged in upright positions, because performing service on the filtering system will thereby be difficult. Prior art examples are disclosed in EP2184486, EP2246562 and CN201568226U.

### DESCRIPTION OF THE INVENTION

It is an object of embodiments of the invention to provide an efficient filter placement in order to have space and cost effective filtering systems.

In a first aspect, the present invention provides a lubrication system for a wind turbine, the lubrication system comprising at least one or more pumps, a tubing system, one or more lubricant reservoirs, and a filtering system, the filtering system comprising at least one cylindrical filter container, each cylindrical filter container comprising at least one filter element, each cylindrical filter container defining a central axis along its axial direction, wherein the central axis of each cylindrical filter container is oriented in a direction forming an angle of at least 10° with respect to a vertical direction.

The lubrication system is typically a closed system, in which lubricant is continuously circulated and supplied to one or more components which need to be lubricated, typically components containing moving parts. The circulation of the lubricant is provided by means of the one or more pumps, but may also be at least partly provided by movements of moving parts of the components being lubricated.

Thus, the pumps are controlling the amount of the lubricant needed for a lubrication of the bearings and components, as well as flow direction and circulation of the lubricant. This is controlled by pressure provided by the pumps.

The tubing system is a connection between the lubrication system elements, i.e., a connection between the pumps, lubricant reservoirs, and filtering system. It comprises a plurality of tubes guiding the lubricant, as well as a fluid that may be involved in the lubricant filtering. The tubes precisely deliver the lubricant to friction points while the wind turbine is operating.

The filtering system is comprised in the lubrication system of a wind turbine, as the lubricant requires high level of cleanness. For instance, the lubricant may contain debris originating from moving parts of the component(s) being lubricated, e.g. due to parts, such as gear teeth, grinding against each other. Such debris needs to be filtered out from the lubricant, in order to avoid damage to the components being lubricated or clogging of the system. When well engineered, the filtering system can filter the lubricant up to two years without being exchanged.

The cylindrical filter container, as a part of filtering system, is a canister that can be reused when it comes to servicing or exchange of the filtering system. The cylindrical container may be made of aluminium, plastic, or similar durable material. The material of which the container is made is preferred to be relatively easy to shape in different sizes and shapes, as the cylindrical filter container comprises one or more filter elements that may be arranged in different ways. The container is cylindrical in shape. In the present context the term 'cylindrical' should be interpreted to mean a shape which has a substantially constant cross sectional shape, which propagates along a central axis. Accordingly, the central axis of the cylindrical filter container defines a longitudinal direction of the filter container. The cross section of the cylindrical filter container will normally be circular, but it is not ruled out that the cross sectional shape may deviate from a circular shape, e.g. being an oval or a polygonal shape which approaches a circular shape. The filtering system may comprise a single cylindrical filter container, or it may comprise two or more cylindrical filtering containers, arranged, e.g., in parallel or in series.

The filter element is a single filter unit situated inside the cylindrical filter container, and unlike the container, it cannot be reused. It needs to provide high level of fluid cleanliness. The filter elements are disposed as chemical waste after, typically, one or two years of use. They can be made of various materials such as cellulose, micro fiberglass filter media, stainless steel wire cloth, metal felt, etc. Each cylindrical filter container may comprise a single filter element, or each cylindrical filter container may comprise two or more filter elements.

The vertical direction is to be interpreted as a direction extending from up to down (or down to up), such as the y-axis in the Cartesian coordinate system. Vertical direction is locally aligned with the local gravity vector at a point where the vertical direction is passing by.

By having the cylindrical filter container oriented in a direction forming an angle of at least 10° with respect to the vertical direction utilization of space as well as compactness of a filtering system is significantly improved compared to, for instance, the filters placed in upright positions within ±10° from the vertical direction. Often, the available space inside a nacelle along a vertical dimension is limited, and this limits the number of filter containers as well as the size of the filter containers, when these are arranged in an upright position. However, when the filter containers are positioned in accordance with the present invention, this is not limiting.

The cylindrical filter container of the filtering system may be mounted to the lubrication system by means of at least one releasable clamp. The at least one releasable clamp is to ensure an easy removal from the lubrication system for exchange. The releasable clamps may be quick release clamps. Quick removal is advantageous as the container may need to be removed from the lubrication system for exchange of the filter elements.

The filtering system may form a first and a second end. The first end may be in fluid communication with the lubricant reservoir and the second end may be in fluid communication with a lubrication point on the wind turbine. The lubricant may enter at the first end of the filtering system and exit at the second end of the filtering system. The lubricant reservoir may inject the lubricant to the filtering system by a pumping mechanism. The pump mechanism may be in communication either with the first or with the second end. If in communication with the first end where the fluid enters the filtering system, the pump mechanism would create a pressure, which would push the lubricant through the system. The pump mechanism may also be in communication with the lubricant reservoir pulling the lubricant out of the reservoir and injecting it to the first end of the filtering system. In case the pump mechanism is in communication with the second end of the filtering system, the pump would create a pressure, which would pull out the lubricant through the system.

In one embodiment of the invention, at least two filter elements of the filtering system may be arranged fluidly in parallel to each other. In such an arrangement the lubricant flow in, for instance, two filter elements is parallel to each other, i.e., the lubricant flow is divided among a number of parallel flow paths, e.g. in an inlet manifold, each passing through one of the filter elements. The lubricant from each of the parallel flow paths will then be reunited again, after having passed through the filter elements, e.g. in an outlet manifold. In this embodiment, the at least two filter elements may be arranged so that they are parallel to each other.

In another embodiment of the invention, at least two filter elements of the filtering system may be connected fluidly in series. In such an embodiment, the outlet of one of the filter elements is fluidly connected to the inlet of the second filter element. The at least two filter elements may be arranged adjacent to each other along the central axis of the cylindrical filter container, i.e., one element in continuation of another, along the direction defined by the central axis of the cylindrical filter container. As an alternative, the filter elements may be arranged adjacent to each other along a direction which differs from the direction defined by the central axis of the cylindrical filter container.

According to the invention, the filtering system is directly mounted on a drive train component of the wind turbine. The term "directly mounted" is to be interpreted such that the component is in an abutting contact with the filtering system. The drive train component may include a component such as a gearbox, generator, rotor shaft, bearings, brakes, or the like. The filtering system may be mounted by means of at least one hose clamp and/or at least one standard clamp. By placing the filtering system directly to the drive train component an efficient utilization of space is achieved.

The filtering system may be configured to deliver the lubricant directly to the drive train component of the wind turbine through a single pipe connecting the filtering system and the component. This single pipe may be in an abutting contact with the component that is to be lubricated. The pipe may carry the lubricant from the filtering system to the component and at the contact with the component may deliver the lubricant. Delivering the lubricant directly to the drive train component a length and complexity of the tubing system connecting the filtering system and the component is minimized. Furthermore, a pressure loss introduced between the filter elements and the component being lubricated is minimised.

The at least one filter element may form part of a pipeline of the lubrication system. By having the at least one filter element within the lubrication pipeline operation and maintenance cost may be significantly reduced. Furthermore, as the filter element filtering the lubricant is within the pipeline carrying it, the complexity of the tubing system is drastically reduced. Moreover, the size of the lubrication system is also reduced. Finally, pressure losses introduced in the lubrication system are minimised, since the lubricant will not have to divert from the flow path of the lubrication system in order to pass through the filtering system.

The filter elements comprised in the filtering system may have a diameter between 150 mm and 250 mm, such as between 150 mm and 230 mm, such as between 200 mm and 220 mm, and such as approximately 220 mm. Furthermore, the filter elements comprised in the filtering system may have a length between 200 mm and 600 mm, such as between 300 mm and 500 mm, such as approximately 400 mm. According to one embodiment, the cylindrical filter container may comprise four filter elements, arranged adjacent to each other along the central axis of the cylindrical filter container. In the case that each filter element has a length of approximately 400 mm, the total length of the cylindrical filter container will be approximately 1600 mm.

At least one of the cylindrical filter container(s) may comprise at least two filter elements, the filter elements being arranged adjacent to each other along the central axis of the cylindrical filter container. According to this embodiment, the filter elements may be connected fluidly in series. Alternatively, they may be connected fluidly in parallel, even though they are arranged one behind the other along the direction of the central axis. This will be described in further detail below.

In one embodiment of the invention, the filtering system may be configured for inside-out filtration. According to this embodiment, lubricant entering the cylindrical filter container is supplied directly to an internal part of the filter elements. The filtering process then takes place as the lubricant leaves each filter element, e.g. being collected in a common flow path defined in the cylindrical filter container.

In another embodiment of the invention, the filtering system may be configured for outside-in filtration. According to this embodiment, lubricant entering the cylindrical filter container may be supplied to a common flow path defined in the cylindrical filter container, the flow path being fluidly connected to each of the filter elements. The filtering process then takes place as the lubricant enters each of the filter elements. According to this embodiment, the filter elements may be arranged one behind the other along the direction of the central axis of the cylindrical filter container, but may still be connected fluidly in parallel.

A type of lubricant may determine the way in which the filtering system is configured to perform filtration. Furthermore, the location may be another parameter. Namely, depending on location of the wind turbine, contaminating particles may be different requiring different filtration approach.

The central axis of each cylindrical filter container may be oriented in a direction forming an angle in the range between 70° and 110° with respect to the vertical direction. By having such a configuration, the cylindrical filter container may be arranged with its central axis nearly parallel to the rotor axis of a wind turbine. The rotor axis will normally be slightly inclined with respect to a horizontal direction, in order to avoid collisions between the wind turbine blades and the wind turbine tower. The various drive train components will normally comprise rotational axes which coincide with the rotor axis. Arranging the cylindrical filter container with its central axis in parallel with the rotor axis will thereby allow the cylindrical filter container to be aligned with such rotational axes. As an alternative, the central axis of the cylindrical filter container may be arranged along a substantially horizontal direction.

The lubrication system may further comprise a heat-exchanging element arranged in or immediately adjacent to the filtering system. The connection between the heat-exchanging element and the filtering system may be established in different ways, e.g., via a flexible or stiff connection, via a pipe, or similar. The heat-exchanging element controls the temperature of the lubricant, which needs to be within a certain range. For instance, the lubricant may be used for cooling heat generating components of the wind turbine, in which case the heat exchanging element may ensure that the heat which is removed from the heat generating component is dissipated. As an alternative, the heat exchanging element may be used for ensuring that the lubricant is maintained at a certain minimum temperature, providing a desired viscosity of the lubricant. The heat-exchanging element may, e.g., be or comprise a plate heat exchanger.

The filtering system may be mounted on the drive train component of the wind turbine and the filtering system may be accommodated within a transport unit. Namely, when the transport unit is, for instance, cubic or similar, and the component being transported is cylindrical or similar, there are some "corners" of the transport unit where there is room for the filtering system mounted on the component. The filtering system can accommodate these "corners, i.e. some vacant space inside a transport unit, which would otherwise be unused. An example of a substantially cylindrical component is a gear box.

In a second aspect, the invention relates to a wind turbine comprising a lubrication system according to above description. The wind turbine comprising a lubrication system with a cost and space effective filtering system will naturally have lower cost.

### BRIEF DESCRIPTION OF THE DRAWINGS

The invention will now be described in further detail with reference to the accompanying drawings in which
Fig. 1a illustrates possible orientation of a cylindrical filter container according to an embodiment of the invention,
Fig. 1b illustrates a wind turbine, indicating its vertical direction,
Fig. 2 illustrates a filtering system according to an embodiment of the invention being mounted on a drive train component,
Fig. 3 illustrates a filtering system according to a first embodiment of the invention, the filtering system comprising a cylindrical filter container with filter elements being fluidly connected in series,
Fig. 4 illustrates a filtering system according to a second embodiment of the invention, the filtering system comprising two cylindrical filter containers arranged in parallel, and
Fig 5 illustrates a filtering system accommodated in a transport unit.

### DETAILED DESCRIPTION OF THE DRAWINGS

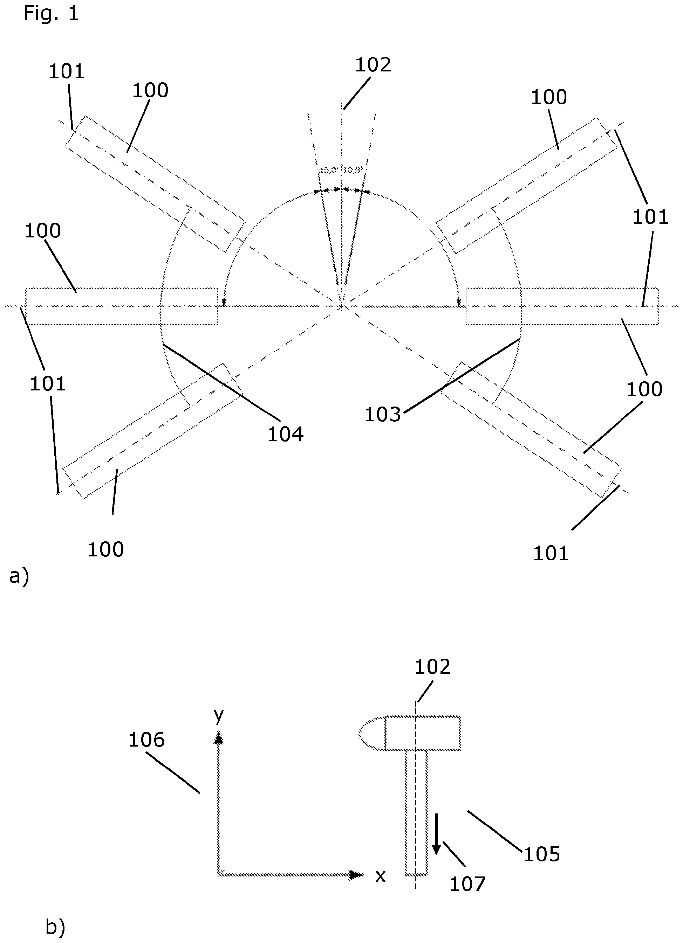

Fig. 1a illustrates possible orientation of a cylindrical filter container 100. Each cylindrical filter container 100 defines a central axis 101 along the container's axial direction. According to the invention, the central axis 101 of each cylindrical filter container 100 is oriented in a direction forming an angle of at least 10° with respect to a vertical direction 102. According to one embodiment of the invention, the central axis 101 of each cylindrical filter container 100 may be oriented in a direction forming an angle in the range between 70° and 110° with respect to the vertical direction 102, as indicated by regions 103 and 104. By having such a configuration, the cylindrical filter container 100 may be nearly parallel to the rotor axis of a wind turbine (not shown). Fig. 1b illustrates a wind turbine 105 and a coordinate system 106. The vertical direction 102 is a direction extending from up to down (or down to up), such as the y-axis of the coordinate system 106. The vertical direction 102 is parallel with the local gravity vector 107.

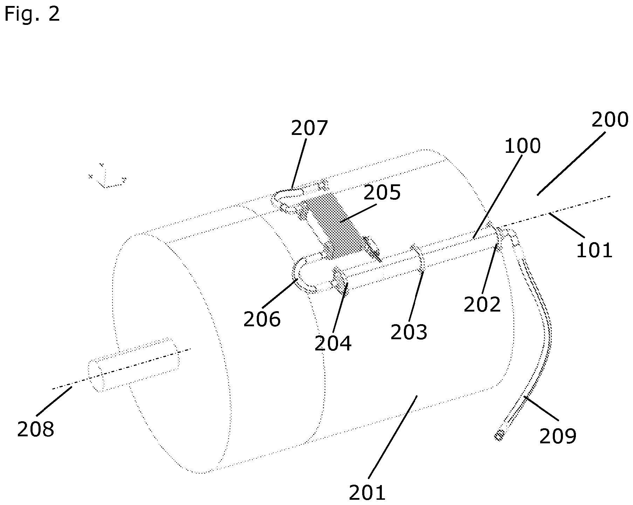

Fig. 2 illustrates the filtering system 200 mounted on a drive train component 201. The cylindrical filter container 100 of the filtering system 200 is directly mounted on a drive train component 201 of the wind turbine. It can be seen from the drawing that the component 201 is in an abutting contact with the cylindrical filter container 100. The drive train component 201 may be a component such as a gearbox, generator, rotor shaft, bearings, brakes, or the like. The cylindrical filter container 100 is mounted to the component 201 by means of three hose clamps 202, 203, 204. Fig. 2 also illustrates a heat-exchanging element 205, being connected to the filtering system 200 via a tube 206. The heat-exchanging element 205 may then be connected to the tube 207 which delivers the lubricant to the component 201. The figure illustrates that the central axis 101 of the cylindrical filter container 100 is arranged substantially parallel to the central axis 208 of the component 201. The filtering system 200 further comprises a tube 209 connected to the inlet of the cylindrical filter container 100, the tube 209 delivering lubricant to filter elements arranged in the cylindrical filter container 100.

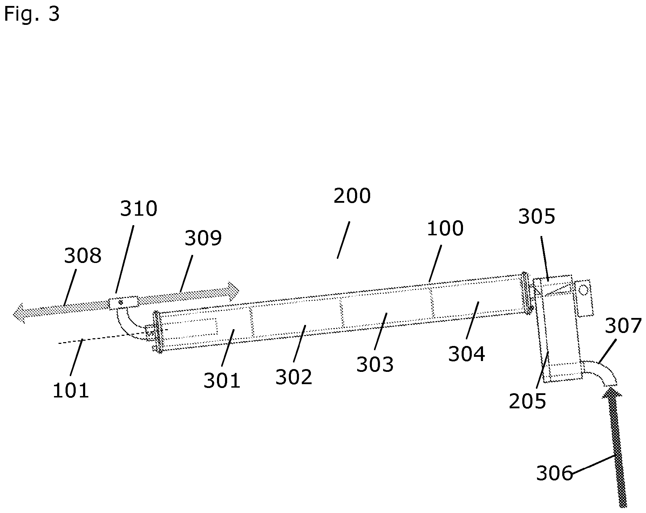

Fig. 3 illustrates a filter system 200 according to a first embodiment of the invention. The filter system 200 comprises a cylindrical filter container 100 comprising four filter elements, 301, 302, 303, 304 arranged adjacent to each other along the central axis 101 of the cylindrical filter container 100, i.e., one element is in continuation of another. The filter elements 301, 302, 303, 304 are connected fluidly in parallel, in the sense that lubricant enters a common flow path defined in the cylindrical filter container 100, circumferentially with respect to the filter elements 301, 302, 303, 304. From the common flow path, lubricant enters each of the filter elements 301, 302, 303, 304, thereby causing filtering of the lubricant. Fig. 3 further illustrates a heat-exchanging element 205 connected to the cylindrical filter container 100 via the pipe 305. The arrow 306 indicates the inflow of a lubricant through the pipe 307. The arrows 308 and 309 illustrate outflow of the lubricant towards different components (not shown). The outflow is regulated via the pump 310.

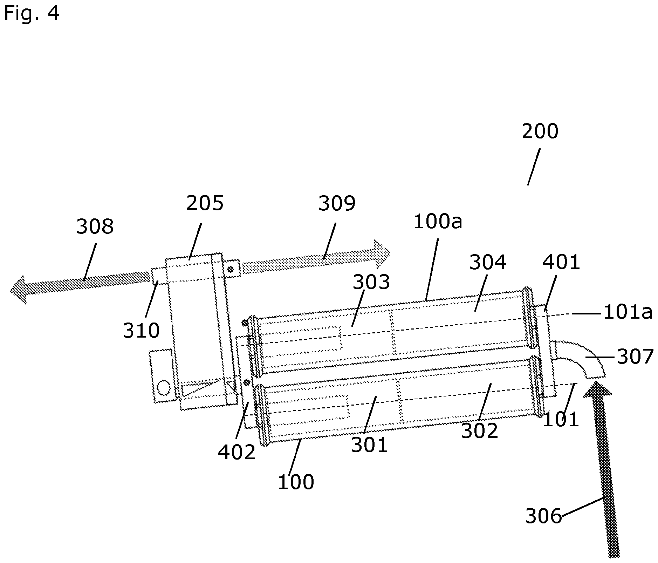

Fig. 4 illustrates a filtering system 200 according to a second embodiment of the invention. The filtering system 200 comprises two cylindrical filter containers 100 and 100a, arranged in parallel to each other. Therefore, their corresponding central axes 101 and 101a are also arranged in parallel to each other. Each cylindrical filter container 100 and 100a comprises two filter elements 301, 302 and 303, 304 arranged adjacent to each other, but fluidly in parallel, as described above. The two filter elements 301 and 302 of the filtering system 200 are arranged adjacent to each other and enclosed by the container 100. The other two filter elements 303 and 304 are enclosed by the other container 100a. In this way, the lubricant from different filter elements, e.g., 301 and 303 is completely split from each other. The two containers 100 and 100a are then fluidly arranged in parallel to each other. In such a configuration the lubricant flow in two containers 100 and 100a is parallel to each other, i.e., the lubricant flow is divided between a part passing through the first cylindrical filter container 100 and a part passing through the second cylindrical filter container 100a, in an inlet manifold 401. After having passed through the filter elements 301, 302, 303 and 304, the lubricant flows from the two cylindrical filter containers 100, 100a are reunited in an outlet manifold 402. Fig. 4 further illustrates a heat-exchanging element 205 connected to the containers 100 and 100a via the outlet manifold 402. The arrow 306 indicates the inflow of a lubricant through the pipe 307. The arrows 308 and 309 illustrate outflow of the lubricant towards different components (not shown). The outflow is regulated via the pump 310.

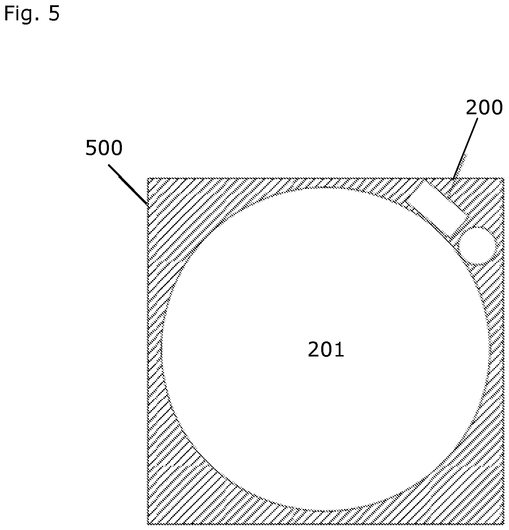

Fig. 5 illustrates how a filtering system 200 according to an embodiment of the invention can be accommodated in a transport unit 500 which is used for transporting a wind turbine component 201, e.g. in the form of a drive train component, such as a gear box. The filtering system 200 is mounted on the drive train component 201 of the wind turbine, and the drive train component 201 is accommodated in the transport unit 500. The filtering system 200 is also accommodated within a transport unit 500. The transport unit 500 is cubic and the component 201 to be transported is substantially cylindrical. It can be seen that there are some "corners" (hashed areas) of the transport unit 500 where there is room for the filtering system 200 mounted on the component 201. The filtering system 200 is mounted at a position of the drive train component 201 which corresponds to one of these "corners". Accordingly, the filtering system 200 can be accommodated in this vacant space inside a transport unit 500 during transport of the drive train component 201, and thereby the available transporting space is utilized to the greatest possible extent.

It should be noted that in addition to the exemplary embodiments of the invention shown in the accompanying drawings, the invention may be embodied in different forms and should not be construed as limited to the embodiments set forth herein. Rather, these embodiments are provided so that this disclosure will be thorough and complete, and will fully convey the concept of the invention to those skilled in the art. The scope of the invention is thus defined by the appended claims.

## Claims

1. A lubrication system for a wind turbine (105), the lubrication system comprising at least one or more pumps (310), a tubing system, one or more lubricant reservoirs, and a filtering system (200), the filtering system (200) comprising at least one cylindrical filter container (100), each cylindrical filter container (100, 100a) comprising at least one filter element (301-304), each cylindrical filter container (100) defining a central axis (101) along its axial direction,
**characterized in that** said filtering system (200) is directly mounted on a drive train component (201) of the wind turbine (105) and **in that** the central axis (101) of each cylindrical filter container (100, 100a) is oriented in a direction forming an angle of at least 10° with respect to a vertical direction (102).

2. A lubrication system according to claim 1, wherein the cylindrical filter container (100) of the filtering system (200) is mounted to the lubrication system by means of at least one releasable clamp (202-204).

3. A lubrication system according to claims 1 and 2, wherein the filtering system (200) forms a first and a second end, the first end being in fluid communication with the lubricant reservoir, the second end being in fluid communication with a lubrication point on the wind turbine (105), and wherein the lubricant enters at the first end of the filtering system (200) and exits at the second end of the filtering system (200).

4. A lubrication system according to any of the preceding claims, wherein at least two filter elements (301-304) of the filtering system (200) are arranged fluidly in parallel to each other.

5. A lubrication system according to any of the preceding claims, wherein at least one of the cylindrical filter container(s) (100) comprises at least two filter elements (301-304), the filter elements (301-304) being arranged adjacent to each other along the central axis (101) of the cylindrical filter container (100).

6. A lubrication system according to any of the preceding claims, wherein the filtering system (200) is configured to deliver lubricant directly to the drive train component (201) of the wind turbine (105) through a single tube connecting the filtering system (200) and the component (201).

7. A lubrication system according to any of the preceding claims, wherein at least one filter element (301-304) forms part of a pipeline of the lubrication system.

8. A lubrication system according to any of the preceding claims, wherein the filter elements (301-304) comprised in the filtering system (200) have a diameter between 150 mm and 250 mm, and wherein the filter elements (301-304) comprised in the filtering system (200) have a length between 200 mm and 600 mm.

9. A lubrication system according to any of the preceding claims, wherein the filtering system (200) is configured for inside-out filtration.

10. A lubrication system according to claims 1-8, wherein the filtering system (200) is configured for outside-in filtration.

11. A lubrication system according to any of the preceding claims, wherein the central axis (101) of each cylindrical filter container (100, 100a) is oriented in a direction forming an angle in the range between 70° and 110° with respect to the vertical direction (102).

12. A lubrication system according to any of the preceding claims, wherein the lubrication system further comprises a heat-exchanging element (205) arranged in or immediately adjacent to the filtering system (200).

13. A lubrication system according to any of the preceding claims, wherein the filtering system (200) is mounted on the drive train component (201) of the wind turbine (105), the filtering system (200) being accommodated within a transport unit (500).

14. A wind turbine (105) comprising a lubrication system according to any of the preceding claims.

## Patentansprüche

1. Schmiersystem für eine Windkraftanlage (105), wobei das Schmiersystem mindestens eine oder mehrere Pumpen (310), ein Rohrsystem, ein oder mehrere Schmiermittelreservoirs und ein Filtersystem (200) umfasst, wobei das Filtersystem (200) mindestens einen zylindrischen Filterbehälter (100) umfasst, wobei jeder zylindrische Filterbehälter (100, 100a) mindestens ein Filterelement (301-304) umfasst, wobei jeder zylindrische Filterbehälter (100) eine Mittelachse (101) entlang seiner axialen Richtung definiert,
**dadurch gekennzeichnet, dass** das Filtersystem (200) direkt auf einer Antriebskomponente (201) der Windkraftanlage (105) montiert ist und dass die Mittelachse (101) jedes zylindrischen Filterbehälters (100, 100a) in einer Richtung ausgerichtet ist, die einen Winkel von mindestens 10° in Bezug auf eine vertikale Richtung (102) bildet.

2. Schmiersystem nach Anspruch 1, wobei der zylindrische Filterbehälter (100) des Filtersystems (200) mittels mindestens einer lösbaren Klemme (202-204) an dem Schmiersystem montiert ist.

3. Schmiersystem nach einem der Ansprüche 1 und 2, wobei das Filtersystem (200) ein erstes und ein zweites Ende bildet, wobei das erste Ende in strömungstechnischer Kommunikation mit dem Schmiermittelreservoir steht, wobei das zweite Ende in strömungstechnischer Kommunikation mit einer Schmierstelle an der Windkraftanlage (105) steht, und wobei das Schmiermittel am ersten Ende des Filtersystems (200) eintritt und am zweiten Ende des Filtersystems (200) austritt.

4. Schmiersystem nach einem der vorstehenden Ansprüche, wobei mindestens zwei Filterelemente (301-304) des Filtersystems (200) strömungstechnisch parallel zueinander angeordnet sind.

5. Schmiersystem nach einem der vorstehenden Ansprüche, wobei mindestens einer des/der zylindrischen Filterbehälter(s) (100) mindestens zwei Filterelemente (301-304) umfasst, wobei die Filterelemente (301-304) entlang der Mittelachse (101) des zylindrischen Filterbehälters (100) nebeneinander angeordnet sind.

6. Schmiersystem nach einem der vorstehenden Ansprüche, wobei das Filtersystem (200) so konfiguriert ist, dass es Schmiermittel direkt an die Antriebskomponente (201) der Windkraftanlage (105) durch ein einziges Rohr liefert, das das Filtersystem (200) und die Komponente (201) verbindet.

7. Schmiersystem nach einem der vorstehenden Ansprüche, wobei mindestens ein Filterelement (301-304) Teil einer Rohrleitung des Schmiersystems ist.

8. Schmiersystem nach einem der vorstehenden Ansprüche, wobei die Filterelemente (301-304), die in dem Filtersystem (200) umfasst sind, einen Durchmesser zwischen 150 mm und 250 mm aufweisen, und wobei die Filterelemente (301-304), die in dem Filtersystem (200) umfasst sind, eine Länge zwischen 200 mm und 600 mm aufweisen.

9. Schmiersystem nach einem der vorstehenden Ansprüche, wobei das Filtersystem (200) für eine Innen-nach-Außen-Filtration konfiguriert ist.

10. Schmiersystem nach einem der Ansprüche 1-8, wobei das Filtersystem (200) für eine Außen-nach-Innen-Filtration konfiguriert ist.

11. Schmiersystem nach einem der vorstehenden Ansprüche, wobei die Mittelachse (101) jedes zylindrischen Filterbehälters (100, 100a) in einer Richtung ausgerichtet ist, die einen Winkel im Bereich zwischen 70° und 110° in Bezug auf die vertikale Richtung (102) bildet.

12. Schmiersystem nach einem der vorstehenden Ansprüche, wobei das Schmiersystem weiter ein Wärmetauscherelement (205) umfasst, das in oder unmittelbar neben dem Filtersystem (200) angeordnet ist.

13. Schmiersystem nach einem der vorstehenden Ansprüche, wobei das Filtersystem (200) an der Antriebskomponente (201) der Windkraftanlage (105) montiert ist, wobei das Filtersystem (200) innerhalb einer Transporteinheit (500) untergebracht ist.

14. Windkraftanlage (105), die ein Schmiersystem nach einem der vorstehenden Ansprüche umfasst.

## Revendications

1. Système de lubrification pour une éolienne (105), le système de lubrification comprenant au moins une ou plusieurs pompes (310), un système de tuyauterie, un ou plusieurs réservoirs de lubrifiant et un système de filtrage (200), le système de filtrage (200) comprenant au moins un récipient de filtre cylindrique (100), chaque récipient de filtre cylindrique (100, 100a) comprenant au moins un élément filtrant (301-304), chaque récipient de filtre cylindrique (100) définissant un axe central (101) le long de sa direction axiale,
**caractérisé en ce que** ledit système de filtrage (200) est directement monté sur un composant de train d'entraînement (201) de l'éolienne (105) et **en ce que** l'axe central (101) de chaque récipient de filtre cylindrique (100, 100a) est orienté dans une direction formant un angle d'au moins 10° par rapport à une direction verticale (102).

2. Système de lubrification selon la revendication 1, dans lequel le récipient de filtre cylindrique (100) du système de filtrage (200) est monté sur le système de lubrification au moyen d'au moins une pince amovible (202-204).

3. Système de lubrification selon les revendications 1 et 2, dans lequel le système de filtrage (200) forme une première et une seconde extrémité, la première extrémité étant en communication fluidique avec le réservoir de lubrifiant, la seconde extrémité étant en communication fluidique avec un point de lubrification sur l'éolienne (105) et dans lequel le lubrifiant entre au niveau de la première extrémité du système de filtrage (200) et sort au niveau de la seconde extrémité du système de filtrage (200).

4. Système de lubrification selon l'une quelconque des revendications précédentes, dans lequel au moins deux éléments filtrants (301-304) du système de filtrage (200) sont agencés de manière fluidique en parallèle l'un par rapport à l'autre.

5. Système de lubrification selon l'une quelconque des revendications précédentes, dans lequel au moins l'un du ou des récipients de filtre cylindriques (100) comprend au moins deux éléments filtrants (301-304), les éléments filtrants (301-304) étant agencés adjacents l'un à l'autre le long de l'axe central (101) du récipient de filtre cylindrique (100).

6. Système de lubrification selon l'une quelconque des revendications précédentes, dans lequel le système de filtrage (200) est configuré pour distribuer du lubrifiant directement au composant de train d'entraînement (201) de l'éolienne (105) au moyen d'un tube unique reliant le système de filtrage (200) et le composant (201).

7. Système de lubrification selon l'une quelconque des revendications précédentes, dans lequel au moins un élément filtrant (301-304) fait partie d'une canalisation du système de lubrification.

8. Système de lubrification selon l'une quelconque des revendications précédentes, dans lequel les éléments filtrants (301-304) compris dans le système de filtrage (200) présentent un diamètre entre 150 mm et 250 mm et dans lequel les éléments filtrants (301-304) compris dans le système de filtrage (200) présentent une longueur entre 200 mm et 600 mm.

9. Système de lubrification selon l'une quelconque des revendications précédentes, dans lequel le système de filtrage (200) est configuré pour une filtration de l'intérieur vers l'extérieur.

10. Système de lubrification selon les revendications 1-8, dans lequel le système de filtrage (200) est configuré pour une filtration de l'extérieur vers l'intérieur.

11. Système de lubrification selon l'une quelconque des revendications précédentes, dans lequel l'axe central (101) de chaque récipient de filtre cylindrique (100, 100a) est orienté dans une direction formant un angle dans la plage entre 70° et 110° par rapport à la direction verticale (102).

12. Système de lubrification selon l'une quelconque des revendications précédentes, dans lequel le système de lubrification comprend en outre un élément d'échange de chaleur (205) agencé dans le, ou immédiatement adjacent au, système de filtrage (200).

13. Système de lubrification selon l'une quelconque des revendications précédentes, dans lequel le système de filtrage (200) est monté sur le composant de train d'entraînement (201) de l'éolienne (105), le système de filtrage (200) étant logé dans une unité de transport (500).

14. Éolienne (105) comprenant un système de lubrification selon l'une quelconque des revendications précédentes.
